# EUROPÄISCHE PATENTANMELDUNG

(11) **EP 3 907 424 A1**
(43) Veröffentlichungstag der Anmeldung: **10.11.2021**
(21) Anmeldenummer: 20172819.3
(22) Anmeldetag: 04.05.2020
(51) Int. Cl.: F17C 5/06

(54) **VERFAHREN UND ANLAGE ZUR BETANKUNG EINES FAHRZEUGTANKS**

(71) Anmelder: Fronius International GmbH, 4643 Pettenbach (AT)
(72) Erfinder: Danmayr, Joachim, 4643 Pettenbach (AT); Apfelthaler, Lukas, 4643 Pettenbach (AT); Rechberger, Philipp, 4643 Pettenbach (AT); Keuschnigg, Richard, 4643 Pettenbach (AT)
(74) Vertreter: Isarpatent

(57) **Zusammenfassung**

Betankungsanlage (1) zum Betanken eines Fahrzeugtanks (2) eines Fahrzeugs (3) mit Gas, insbesondere Wasserstoff, in einem Betankungsvorgang, mit einem Rechner (4), der ein System, das die Betankungsanlage (1) und den zu betankenden Fahrzeugtank (2) des Fahrzeugs (3) umfasst, auf Basis eines gespeicherten Simulationsmodells des Systems anhand von Messdaten (MD), die in Echtzeit durch Sensoren (6) der Betankungsanlage (1) während des Betankungsvorganges generiert werden, zur Berechnung von Regelparametern, RP, simuliert; und mit mindestens einem Regler (5), welcher mit Regelparametern (RP) einstellbar ist, die durch den Rechner (4) durch Simulation des Systems berechnet werden, um Stellgrößen (SG) zur Betätigung eines zugehörigen Aktuators (7) der Betankungsanlage (1) während des Betankungsvorganges zu erzeugen.

## Beschreibung

Die Erfindung betrifft ein Verfahren und eine Vorrichtung zum Betanken eines Fahrzeugtanks eines Fahrzeuges mit einem Gas.

Brennstoffzellen erlauben es, die chemische Reaktionsenergie eines kontinuierlich zugeführten Brennstoffes und eines Oxidationsmittels in elektrische Energie umzuwandeln. Neben Wasserstoff können als Brennstoff auch andere Gase genutzt werden, insbesondere Methanol, Butan oder Erdgas.

Die durch die Brennstoffzelle gewonnene elektrische Energie kann zum Antreiben eines Elektroantriebs, insbesondere bei einem Fahrzeug, benutzt werden. Diese Fahrzeuge umfassen verschiedene Fahrzeugtypen, insbesondere Pkws, Lkws, Arbeitsmaschinen, Busse, Lokomotiven usw. Der Brennstoff, welcher der Brennstoffzelle zugeführt wird, ist in einem Fahrzeugtank gespeichert. Der Fahrzeugtank wird zum Betanken an eine Betankungsanlage angeschlossen. Der Fahrzeugtank kann dann mit einem gasförmigen und/oder flüssigen Medium betankt werden. Die Betankungsanlage verfügt über eine oder mehrere Zapfsäulen, mit welcher der Energievorrat mobiler Verbraucher oder Fahrzeuge aufgefüllt werden kann.

Die Betankung eines gasbetriebenen Fahrzeuges kann nach einem festgelegten Protokoll, ohne Protokoll oder nach Anforderung der Hersteller durchgeführt werden. Beispielsweise kann bei einem wasserstoffbetriebenen Fahrzeug eine Betankung durch eine Betankungsanlage gemäß dem Protokoll J2601 bzw. J2799 durchgeführt werden. Herkömmliche Betankungsverfahren weisen jedoch den Nachteil auf, dass sie entweder den Fahrzeugtank des Fahrzeuges nicht vollständig füllen oder der Betankungsvorgang insgesamt einen langen Zeitraum erfordert.

Es ist daher eine Aufgabe der vorliegenden Erfindung, ein Verfahren und eine Anlage zum Betanken eines Fahrzeugtanks eines Fahrzeuges mit einem Gas zu schaffen, welches es erlaubt, den Fahrzeugtank rasch und vollständig zu befüllen.

Diese Aufgabe wird erfindungsgemäß durch ein Verfahren zum Betanken eines Fahrzeugtanks eines Fahrzeuges mit einem Gas mit den in Patentanspruch 1 angegebenen Merkmalen gelöst.

Die Erfindung schafft demnach ein Verfahren zum Betanken eines Fahrzeugtanks eines Fahrzeuges mit einem Gas, das von einer an das Fahrzeug angeschlossenen Betankungsanlage in einem Betankungsvorgang an den Fahrzeugtank abgegeben wird,
wobei das Verfahren die folgenden Schritte aufweist: Simulieren eines Systems, das die Betankungsanlage und den Fahrzeugtank des zu betankenden Fahrzeuges umfasst, durch einen Rechner der Betankungsanlage auf Basis eines gespeicherten Simulationsmodells des Systems anhand von Messdaten, die in Echtzeit durch Sensoren der Betankungsanlage während des Betankungsvorganges generiert werden, zur Berechnung von Regelparametern,
Einstellen eines Reglers der Betankungsanlage mit den durch die Simulation des Systems berechneten Regelparametern zur Erzeugung von Stellgrößen durch den Regler der Betankungsanlage und
Betätigen von einem oder mehreren Aktuatoren der Betankungsanlage entsprechend den durch den eingestellten Regler der Betankungsanlage erzeugten Stellgrößen.

Ein Vorteil des erfindungsgemäßen Verfahrens besteht darin, dass es eine protokollfreie Betankung des Fahrzeugtanks durch die Betankungsanlage ermöglicht. Es muss somit keine Datenschnittstelle zwischen der Betankungsanlage und dem Fahrzeug vorhanden sein, um die Betankung des Fahrzeugtanks des Fahrzeuges zu ermöglichen.

Bei einer möglichen Ausführungsform des erfindungsgemäßen Verfahrens weist die Betankungsanlage des Systems einen odermehrere Hochdrucktanks auf, die das Gas in komprimierter Form speichern.

Bei einer weiteren möglichen Ausführungsform des erfindungsgemäßen Verfahrens generieren Sensoren der Betankungsanlage Messdaten, die einen Druck, eine Temperatur und/oder einen Massestrom des während des Betankungsvorganges von der Betankungsanlage abgegebenen Gases an einer oder mehreren Stellen einer Gasleitung angeben, welche den Hochdrucktank der Betankungsanlage mit dem Fahrzeugtank des an die Betankungsanlage angeschlossenen Fahrzeuges verbindet.

Bei einer weiteren möglichen Ausführungsform des erfindungsgemäßen Verfahrens steuert der Regler ein Druckventil als Aktuator der Betankungsanlage an, das entlang der Gasleitung vorgesehen ist.

Bei einer weiteren möglichen Ausführungsform des erfindungsgemäßen Verfahrens wird zu Beginn des Betankungsvorganges das Volumen des Fahrzeugtanks sowie Anfangsbedingungen bestimmt bzw. identifiziert. Diese Anfangsbedingungen umfassen beispielsweise eine Außentemperatur und ein in dem Fahrzeugtank herrschenden Vordruck.

Bei einer weiteren möglichen Ausführungsform des erfindungsgemäßen Verfahrens wird das Volumen des Fahrzeugtanks und die Anfangsbedingungen des zu simulierenden Systems anhand einer Messung bestimmt, bei der die Gasleitung mit einem kurzzeitigen hohen Massestrom des Gases bei geöffnetem Druckventil beaufschlagt wird, wobei eine Systemantwort des Systems hierauf aufgezeichnet und zur Bestimmung des Fahrzeugtankvolumens und der Anfangsbedingungen des zu simulierenden Systems durch den Rechner der Betankungsanlage ausgewertet wird.

Bei einer weiteren möglichen Ausführungsform des erfindungsgemäßen Verfahrens wird das Simulationsmodell des Systems durch den Rechner der Betankungsanlage aus einem Datenspeicher geladen.

Bei einer bevorzugten Ausführungsform des erfindungsgemäßen Verfahrens erfolgt der Betankungsvorgang protokollfrei ohne Austausch von Steuersignalen zwischen dem Fahrzeug und dem Rechner der Betankungsanlage.

Bei einer möglichen Ausführungsform des erfindungsgemäßen Verfahrens umfasst das Simulationsmodell ein Echtzeit-Simulationsmodell, welches das System anhand von Differentialgleichungen beschreibt.

Bei einer weiteren möglichen Ausführungsform des erfindungsgemäßen Verfahrens wird der Fahrzeugtank des Fahrzeuges durch die Betankungsanlage mit Wasserstoffgas oder einem anderen Gas betankt.

Bei einer weiteren möglichen Ausführungsform des erfindungsgemäßen Verfahrens wird das durch die Betankungsanlage in dem Betankungsvorgang an den Fahrzeugtank des Fahrzeuges abgegebene Gas durch einen Wärmetauscher der Betankungsanlage gekühlt.

Bei einer weiteren möglichen Ausführungsform des erfindungsgemäßen Verfahrens strömt das Gas während des Betankungsvorganges aus dem Hochdrucktank der Betankungsanlage in einem Massestrom durch eine Gasleitung der Betankungsanlage über mindestens einen durch den Regler betätigten Aktuator der Betankungsanlage und einen Wärmetauscher der Betankungsanlage zu dem Fahrzeugtank des Fahrzeuges, der über einen Schlauch an die Betankungsanlage angeschlossen ist,

Bei einer möglichen Ausführungsform des erfindungsgemäßen Verfahrens werden dabei durch Sensoren der Betankungsanlage jeweils Messdaten hinsichtlich des Drucks, der Temperatur und des Massestromes an verschiedenen Stellen der Gasleitung generiert und an den Rechner der Betankungsanlage in Echtzeit zur Simulation des Systems übermittelt.

Bei einer weiteren möglichen Ausführungsform des erfindungsgemäßen Verfahrens erfolgt das Einstellen des Reglers der Betankungsanlage zyklisch regelmäßig innerhalb eines ersten einstellbaren Zeitintervalls von vorzugsweise ein bis zehn Sekunden.

Bei einer weiteren möglichen Ausführungsform des erfindungsgemäßen Verfahrens erfolgt das Betätigen des Aktuators der Betankungsanlage entsprechend der durch den Regler der Betankungsanlage erzeugten Stellgrößen zyklisch regelmäßig innerhalb eines zweiten einstellbaren Zeitintervalls von vorzugsweise ein bis zehn Millisekunden.

Die Erfindung schafft ferner gemäß einem weiteren Aspekt eine Betankungsanlage zum Betanken eines Fahrzeugtanks eines Fahrzeuges mit Gas mit den in Patentanspruch 15 angegebenen Merkmalen.

Die Erfindung schafft demnach eine Betankungsanlage zum Betanken eines Fahrzeugtanks eines Fahrzeuges mit Gas, insbesondere mit Wasserstoff, in einem Betankungsvorgang, mit: einem Rechner, der ein System, welches die Betankungsanlage und den zu betankenden Fahrzeugtank des Fahrzeuges umfasst, auf Basis eines gespeicherten Simulationsmodells des Systems anhand von Messdaten, die in Echtzeit durch Sensoren der Betankungsanlage während des Betankungsvorganges generiert werden, zur Berechnung von Regelparametern simuliert; und mit mindestens einem Regler, welcher mit Regelparametern einstellbar ist, die durch den Rechner durch Simulation des Systems berechnet werden, um Stellgrößen zur Betätigung eines zugehörigen Aktuators der Betankungsanlage während des Betankungsvorganges zu erzeugen.

Im Weiteren werden mögliche Ausführungsformen des erfindungsgemäßen Verfahrens und der erfindungsgemäßen Anlage zum Betanken eines Fahrzeugtanks eines Fahrzeuges mit einem Gas unter Bezugnahme auf die beigefügten Figuren näher beschrieben.

Es zeigen:
- Fig. 1: ein Schaltbild zur Darstellung einer möglichen Ausführungsform einer erfindungsgemäßen Betankungsanlage;
- Fig. 2: ein Ablaufdiagramm zur Erläuterung des Ausführungsbeispiels eines erfindungsgemäßen Verfahrens zum Betanken eines Fahrzeugtanks;
- Fig. 3: ein weiteres Diagramm zur Erläuterung der Funktionsweise einer erfindungsgemäßen Anlage zum Betanken eines Fahrzeugtanks;
- Figuren 4, 5: Ablaufdiagramme zur Erläuterung möglicher Ausführungsvarianten einer erfindungsgemäßen Betankungsanlage und eines erfindungsgemäßen Verfahrens zum Betanken eines Fahrzeugtanks.

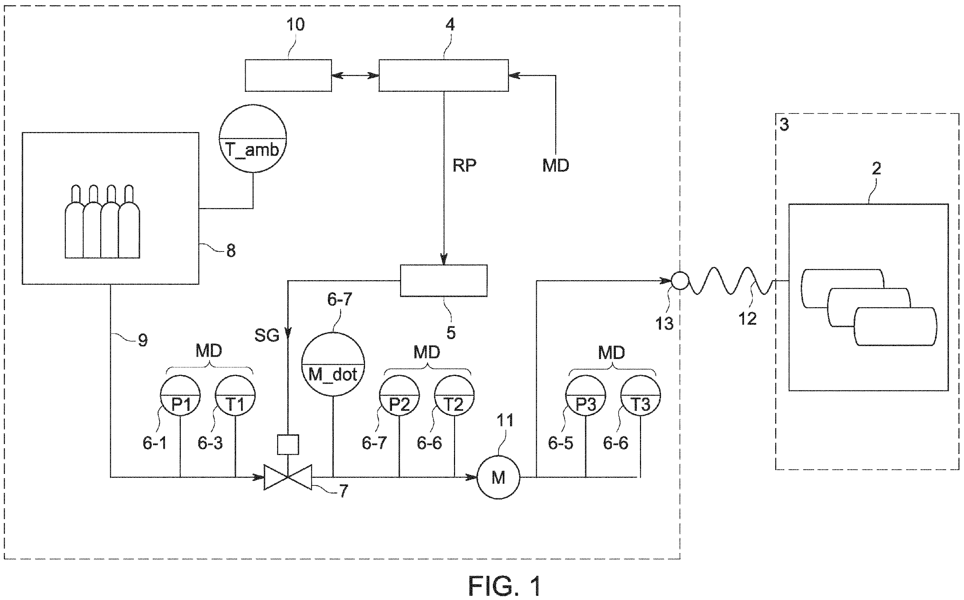

Wie man aus Fig. 1 erkennen kann, dient eine Betankungsanlage 1 gemäß der Erfindung zum Betanken eines Fahrzeugtanks 2, welcher sich innerhalb eines Fahrzeuges 3 befindet. Der Fahrzeugtank 2 dient zum Speichern des darin gefüllten Gases. Die Betankungsanlage 1 ist beispielsweise zum Betanken eines Fahrzeugtanks 2 mit Wasserstoff vorgesehen. Die Betankungsanlage 1 kann auch zum Betanken des Fahrzeugtanks 2 mit anderen Gasen, beispielsweise mit Erdgas, Methanol oder Butan, vorgesehen sein. Bei dem Fahrzeug 3 kann es sich um ein beliebiges Fahrzeug, beispielsweise Pkw, Lkw oder auch Zug, handeln. Bei einer möglichen Ausführungsform verfügt das Fahrzeug 3 über einen Antrieb, welcher elektrische Energie aus mindestens einer Brennstoffzelle bezieht, welche das in dem Fahrzeugtank 2 des Fahrzeuges 3 gespeicherte Gas verbrennt und daraus elektrische Energie generiert. Alternativ kann es sich bei dem Fahrzeug 3 auch um ein Transportfahrzeug handeln, welches das in dem Fahrzeugtank 2 gefüllte Gas von einem Ort zu einem anderen Ort transportiert.

Die in Fig. 1 dargestellte Betankungsanlage 1 enthält mindestens einen Hochdrucktank 8, in dem Gas unter hohem Druck gespeichert ist. Die Betankungsanlage 1 weist eine oder mehrere Hochdrucktanks 8 auf, die das Gas in komprimierter Form speichern können. Der Hochdrucktank 8 ist über eine Gasleitung 9 mit einem Gasanschluss 13 der Betankungsanlage 1 verbunden. In der Gasleitung 9 befindet sich mindestens ein Aktuator 7, beispielsweise ein Druckventil, und ein Wärmetauscher 11. Der Fahrzeugtank 2 des Fahrzeuges 3 kann über einen Schlauch 12 an den Gasanschluss 13 der Betankungsanlage 1 angeschlossen werden, wie in Fig. 1 dargestellt. Bei dem in Fig. 1 dargestellten Ausführungsbeispiel wird der Aktuator 7, d.h. das Druckregelventil, durch einen Regler 5 geregelt. Der Regler 5 liefert Stellgrößen SG für den Aktuator 7.

Die Betankungsanlage 1 verfügt über einen Rechner 4, welcher das System auf Basis eines gespeicherten Simulationsmodells SIM-MOD des Systems anhand von Messdaten MD zur Berechnung von Regelparametern RP simuliert. Bei dem in Fig. 1 dargestellten Ausführungsbeispiel ist das Simulationsmodell des Systems in einem Datenspeicher 10 gespeichert. Die Betankungsanlage 1 verfügt über verschiedene Sensoren 6, welche Messdaten MD in Echtzeit an den Rechner 4 der Betankungsanlage 1 liefern. Auf Basis des gespeicherten Simulationsmodells des Systems simuliert der Rechner 4 anhand der erhaltenen Messdaten MD, welche in Echtzeit durch die Sensoren 6 der Betankungsanlage 1 während des Betankungsvorganges generiert werden, das betreffende System zur Berechnung der Regelparameter RP. Der Regler 5 der Betankungsanlage 1 ist mit den Regelparametern RP, welche durch den Rechner 4 berechnet werden, einstellbar. Der Regler 5 erzeugt Stellgrößen SG zur Betätigung des zugehörigen Aktuators 7 der Betankungsanlage 1 während des Betankungsvorganges.

Bei dem in Fig. 1 dargestellten Ausführungsbeispiel liefern die Sensoren 6 Messdaten MD hinsichtlich eines Druckes P und einer Temperatur T an verschiedenen Abschnitten der Gasleitung 9, welche den Hochdrucktank 8 mit dem Gasanschluss 13 verbindet. Die Sensoren 6-1, 6-2 liefern den Druck P1 und die Temperatur T1 an einem ersten Abschnitt der Gasleitung 9 zwischen dem Hochdrucktank 8 und dem Aktuator 7. Die Sensoren 6-3, 6-4 liefern den Druck P2 und die Temperatur T2 als Messdaten MD an einem zweiten Abschnitt der Gasleitung 9 zwischen dem Aktuator 7 und dem Wärmetauscher 11. Die Sensoren 6-5, 6-6 liefern den Druck P3 und die Temperatur T3 an einem weiteren Abschnitt der Gasleitung 9 zwischen dem Wärmetauscher 11 und dem durch den Schlauch 12 an den Gasanschluss 13 angeschlossenen Fahrzeugtank 2. Weiterhin kann ein Sensor 6-7 als Messdaten MD einen Massestrom M des während des Betankungsvorganges von der Betankungsanlage 1 abgegebenen Gases an den Rechner 4 der Betankungsanlage 1 liefern. Die Anzahl und Lage der verschiedenen Sensoren 6 kann bei verschiedenen Ausführungsformen der Betankungsanlage 1 variieren.

Bei dem in Fig. 1 dargestellten Ausführungsbeispiel befinden sich der Rechner 4 und der Datenspeicher 10 zum Speichern des Simulationsmodells in der Betankungsanlage 1. Bei alternativen Ausführungsformen kann der Rechner 4 über ein Datennetzwerk mit der Betankungsanlage 1 verbunden sein. Beispielsweise kommuniziert der Rechner 4 über ein Datennetzwerk, beispielsweise das Internet, über eine Datenschnittstelle mit dem in der Betankungsanlage 1 vorgesehenen Regler 5. Das Simulationsmodell 10 kann sich in einem externen Datenspeicher oder Datennetzwerk befinden, auf welche der Rechner 4 Zugriff hat.

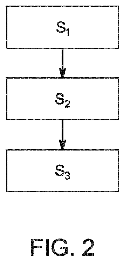

Fig. 2 zeigt ein Ablaufdiagramm einer möglichen Ausführungsform eines erfindungsgemäßen Verfahrens zum Betanken eines Fahrzeugtanks 2 eines Fahrzeuges 3 mit einem Gas.

In einem ersten Schritt S1 wird ein System, welches den gasspeichernden und gasführenden Teil der Betankungsanlage 1 und den Fahrzeugtank 2 des zu betankenden Fahrzeuges 3 umfasst, durch den Rechner 4 der Betankungsanlage 1 auf Basis eines gespeicherten Simulationsmodells SIM-MOD des Systems anhand von Messdaten MD simuliert. Diese Messdaten MD erhält der Rechner 4 in Echtzeit durch die Sensoren 6 der Betankungsanlage 1, welche während des Betankungsvorganges die Messdaten MD generieren. Der Rechner 4 simuliert das Gas-System, welches den gasspeichernden Teil der Betankungsanlage 1 , d.h. den Hochdrucktank 8, und den gasführenden Teil der Betankungsanlage 1, d.h. die verschiedenen Abschnitte der Gasleitung 9, sowie den daran angeschlossenen Fahrzeugtank 2 des zu betankenden Fahrzeuges 3 umfasst, zur Berechnung von Regelparametern RP. Diese berechneten Regelparameter RP werden an den Regler 5 übermittelt.

In einem weiteren Schritt S2 wird der Regler 5 der Betankungsanlage 1 mit den durch die Simulation des Gas-Systems berechneten Regelparametern RP zur Erzeugung von Stellgrößen SG eingestellt.

In einem weiteren Schritt S3 wird der Aktuator 7 der Betankungsanlage 1 entsprechend den durch den eingestellten Regler 5 erzeugten Stellgrößen SG betätigt. Beispielsweise wird ein Druckregelventil entsprechend einer von dem Regler 5 erzeugten Stellgröße SG graduell geöffnet oder geschlossen.

Bei dem erfindungsgemäßen Verfahren wird zu Beginn des Betankungsvorganges vorzugsweise das Volumen des Fahrzeugtanks 2 sowie Anfangsbedingungen 14 ermittelt bzw. bestimmt. Die Anfangsbedingungen 14 umfassen beispielsweise eine Außentemperatur T_amb und/oder einen in dem Fahrzeugtank 2 des Fahrzeuges 3 vor dem Betankungsvorgang herrschenden Vordruck P. Bei einer bevorzugten Ausführungsform wird das Volumen des Fahrzeugtanks 2 sowie die Anfangsbedingungen 14 des zu simulierenden Gas-Systems anhand einer Messung bestimmt, bei welcher die Gasleitung 9 mit einem kurzzeitigen hohen Massestrom M des Gases bei geöffnetem Druckventil 7 beaufschlagt wird, wobei eine Systemantwort des Gas-Systems aufgezeichnet wird. Die aufgezeichnete Systemantwort des Gas-Systems wird anschließend durch den Rechner 4 zur Bestimmung des Fahrzeugtankvolumens des Fahrzeugtanks 2 mit den herrschenden Anfangsbedingungen des zu simulierenden Gas-Systems ausgewertet.

Das in Fig. 2 dargestellte Verfahren erlaubt einen Betankungsvorgang, welcher protokollfrei ohne Austausch von Steuersignalen zwischen dem Fahrzeug 3 und dem Rechner 4 der Betankungsanlage 1 ausgeführt werden kann. Somit ist bei dem erfindungsgemäßen Verfahren keine Datenschnittstelle zwischen dem Fahrzeug 3 und der Betankungsanlage 1 erforderlich, um den Betankungsvorgang durchführen zu können. Bei einer möglichen Ausführungsform des erfindungsgemäßen Verfahrens ist das in dem Datenspeicher 10 der Betankungsanlage 1 gespeicherte Simulationsmodell SIM-MOD ein Echtzeit-Simulationsmodell, welches das Gas-System anhand von Differentialgleichungen beschreibt. Das Simulationsmodell kann beispielsweise mithilfe von MATLAB/Simulink erstellt werden. Das Simulationsmodell beinhaltet Differentialgleichungen, welche die physischen Komponenten des Gas-Systems, d.h. die gasspeichernden und gasführenden Komponenten der Betankungsanlage 1 und den gasspeichernden Fahrzeugtank 2, beschreiben. Das Zustandsraum-Datenmodell (State-Space Model) lässt sich zur Darstellung eines linearen zeitinvarianten Systems verwenden. Das Zustandsraum-Modell beschreibt das System mittels eines Satzes von Differentialgleichungen mit Eingängen, Ausgängen und Zustandsvariablen. Das Zustandsraum-Modell erlaubt die Beschreibung des Systems nicht nur anhand des Eingangs- und Ausgangsverhaltens, sondern auch durch innere Zustände mittels Zustandsvariablen.

Bei dem erfindungsgemäßen Verfahren und der erfindungsgemäßen Betankungsanlage 1 wird mindestens ein Aktuator 7 mit Stellgrößen SG eines Reglers 5 eingestellt. Verschiedene Aktuatoren 7 können eingesetzt werden. Beispielsweise können die Aktuatoren 7 Druckventile, Pumpen, Strom- oder Spannungsquellen umfassen, welche durch den Regler 5 der Betankungsanlage 1 angesteuert werden. Verschiedenartige Typen von Reglern 5 sind möglich. Beispielsweise handelt es sich bei dem Regler 5 um einen P-Regler, einen I-Regler, einen PI-Regler oder einen PID-Regler. Vorzugsweise wird ein Zustandsraumregler 5 eingesetzt, um eine Zustandsraum-Regelung auszuführen. Der Zustandsraumregler kann mit einem Beobachter zur Erhöhung der Regelgüte ergänzt werden. Die Messdaten werden vorzugsweise gesampelt. Bei einer möglichen Ausführungsform erfolgt dies mithilfe einer SPS-Steuereinheit. Allgemein können Analog-Digital-Konverter vorgesehen werden, um digitale Messdaten MD an den Rechner 4 der Betankungsanlage 1 in Echtzeit zu liefern.

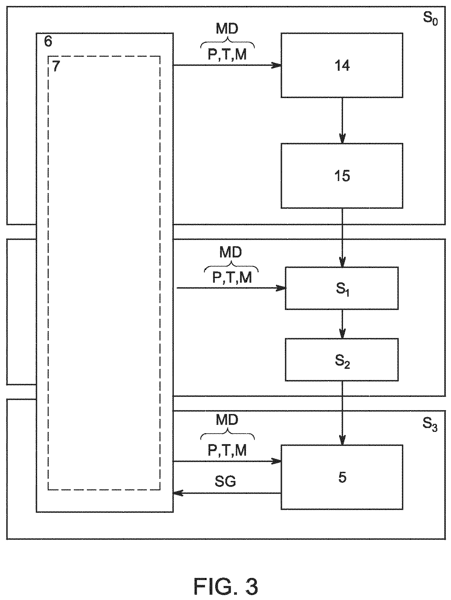

Fig. 3 erläutert die Funktionsweise einer erfindungsgemäßen Betankungsanlage 1 und des in Fig. 2 dargestellten Verfahrens zum Betanken eines Fahrzeugtanks 2. In Fig. 3 ist neben den Schritten S1, S2, S3, welche die Hauptschritte des erfindungsgemäßen Verfahrens umfassen, ein Anfangs-Schritt S0 dargestellt. In diesem Schritt S0 erfolgt zu Beginn des Betankungsvorganges anhand der von dem Sensorsystem 6 der Betankungsanlage 1 erhaltenen Messdaten MD eine Bestimmung der Anfangsbedingungen 14 sowie eines Volumens des Fahrzeugtanks 2. Die Anfangsbedingungen 14 für das System umfassen beispielsweise eine Temperatur und einen in dem Fahrzeugtank 2 herrschenden Vordruck. Das Simulationsmodell kann mit den identifizierten Parametern initialisiert 15 werden. Der Schritt S0 erfolgt typischerweise einmalig zu Beginn des Betankungsvorganges.

Die Schritte S1 und S2 des erfindungsgemäßen Verfahrens, nämlich das Simulieren des Systems zur Berechnung der Regelparameter RP und das Einstellen des Reglers 5 der Betankungsanlage 1 mithilfe der berechneten Regelparameter RP zur Erzeugung der Stellgrößen SG, erfolgt vorzugsweise typischerweise zyklisch regelmäßig innerhalb eines ersten einstellbaren Zeitintervalls von beispielsweise ein bis zehn Sekunden.

Der dritte Schritt S3 des erfindungsgemäßen Verfahrens erfolgt durch den Regler 5 der Betankungsanlage 1 ebenfalls zyklisch regelmäßig innerhalb eines zweiten einstellbaren Zeitintervalls von beispielsweise ein bis zehn Millisekunden. Dabei wird der Aktuator 7 der Betankungsanlage 1 entsprechend der durch den Regler 5 der Betankungsanlage 1 erzeugten Stellgrößen SG zyklisch regelmäßig anhand der Messdaten MD eingestellt.

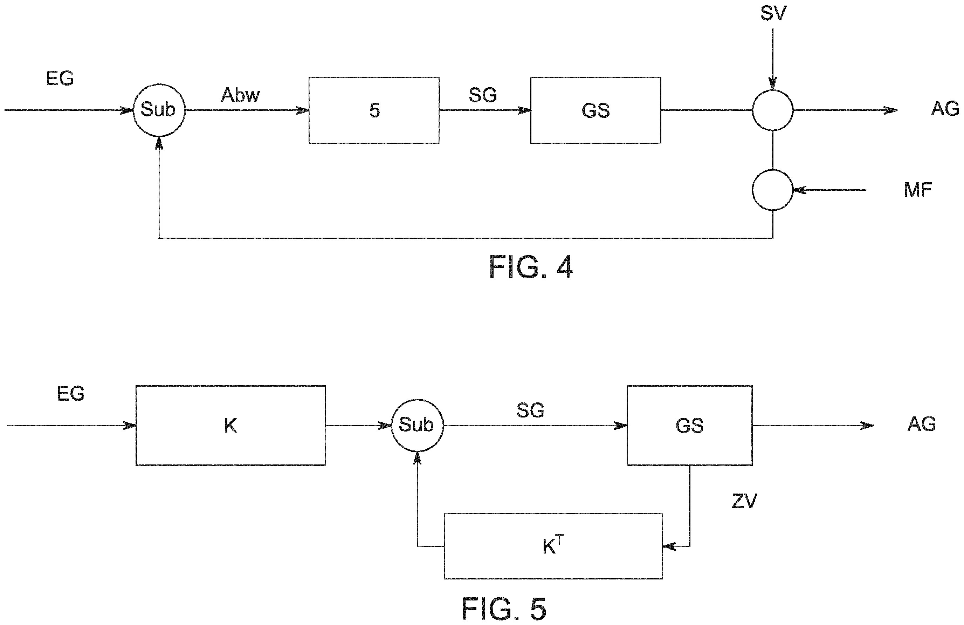

Die Figuren 4, 5 stellen verschiedene Implementierungsmöglichkeiten einer bei der erfindungsgemäßen Betankungsanlage 1 durchgeführten Regelung mithilfe eines Simulationsmodells dar. Fig. 4 zeigt schematisch ein Regelsystem mit geschlossener Regel-Schleife. Dabei wird das geregelte System GS, welches das Gassystem der Betankungsanlage 1 sowie den Fahrzeugtank 2 des zu betankenden Fahrzeuges 3 umfasst, durch die Stellgrößen SG des Reglers 5 beeinflusst. Beispielsweise stellt der Regler 5 ein Druckventil 7 entsprechend den Stellgrößen SG ein. Die Ausgangsgrößen AG des geregelten Systems GS, welche durch Sensoren 6 der Betankungsanlage 1 gemessen werden, werden in einer geschlossenen Schleife zu einem Subtrahierer Sub rückgeführt und von entsprechenden Eingangsgrößen EG bzw. Sollgrößen zur Berechnung von Abweichungen Abw subtrahiert. Diese Abweichungen Abw werden dem Regler 5 der Betankungsanlage 1 zugeführt. Fig. 4 zeigt schematisch auch den Einfluss von Störungen SV und Messfehlern MF auf die Regelung.

Fig. 5 zeigt eine mögliche alternative Implementierung der Regelung. Bei dieser Ausführungsform ist das verwendete Simulationsmodell ein Echtzeit-Simulationsmodell, welches das zu untersuchende System anhand von Differentialgleichungen beschreibt. Das Echtzeit-Simulationsmodell kann beispielsweise mit MATLAB/Simulink erstellt werden. Die Stellgröße SG (Manipulated Variable) ist von den Zustandsgrößen ZV und einer Eingangsgröße EG (Command Variable) abhängig. Der Steuerparameter K dient als Führungsgrößenaufschaltung, der vorgegebene Bedingungen erfüllt. Durch den Vektor k^{T} werden die Eigen-Vektoren des Systems beeinflusst und somit auch die Dynamikmatrix des Systems. Das geregelte System GS umfasst das Gassystem der Betankungsanlage 1 sowie den daran über den Schlauch 12 angeschlossenen Fahrzeugtank 2 des Fahrzeuges 3.

Das erstellte Simulationsmodell SIM-MOD wird bei einer bevorzugten Ausführungsform in einem Datenspeicher 10 hinterlegt. Alternativ kann das Simulationsmodell SIM-MOD auch anhand von Testdaten in einem Maschinenlernprozess erlernt werden. Beispielsweise kann ein Simulationsmodell mithilfe eines KI-Systems auf Basis von Erfahrungen bei einer Vielzahl von Betankungsvorgängen erzeugt werden. Auch Mischformen sind möglich, wobei ein KI-System bestimmte Parameter in dem Simulationsmodell berechnet.

Der in den Figuren 2, 3 dargestellte Betankungsvorgang wird vorzugsweise durch einen Nutzer des Fahrzeuges 3 manuell gestartet. Beispielsweise können durch Sensoren in einer Tankpistole automatisch erkannt werden, dass eine Kupplung bei dem Fahrzeug 3 über einen Schlauch 12 hergestellt worden ist. Durch einen anschließenden Druckstoß kann zudem die Dichtheit der Kupplung geprüft und sichergestellt werden. Anschließend erfolgt im Schritt S0 die Bestimmung der Anfangsbedingungen 14 sowie des Volumens des Fahrzeugtanks 2. Mithilfe des erfindungsgemäßen Verfahrens und der erfindungsgemäßen Betankungsanlage 1 kann eine vollständige Befüllung des Fahrzeugtanks 2 in kurzer Zeit erreicht werden, ohne dass ein Austausch von Kommunikationssignalen zwischen der Betankungsanlage 1 und dem Fahrzeug 3 erforderlich ist.

## Patentansprüche

1. Verfahren zum Betanken eines Fahrzeugtanks (2) eines Fahrzeuges (3) mit einem Gas, das von einer an das Fahrzeug (3) angeschlossenen Betankungsanlage (1) in einem Betankungsvorgang an den Fahrzeugtank (2) abgegeben wird, wobei das Verfahren die folgenden Schritte aufweist:
Simulieren (S1) eines Systems, das gasspeichernde und gasführende Komponenten der Betankungsanlage (1) und den Fahrzeugtank (2) des zu betankenden Fahrzeuges (3) umfasst, durch einen Rechner (4) der Betankungsanlage (1) auf Basis eines gespeicherten Simulationsmodells (SIM-MOD) des Systems anhand von Messdaten (MD), die in Echtzeit durch Sensoren (6) der Betankungsanlage (1) während des Betankungsvorganges generiert werden, zur Berechnung von Regelparametern (RP);
Einstellen (S2) eines Reglers (5) der Betankungsanlage (1) mit den durch die Simulation des Systems berechneten Regelparametern (RP) zur Erzeugung von Stellgrößen (SG) durch den Regler (5) der Betankungsanlage (1); und
Betätigen (S3) von einem oder mehreren Aktuatoren (7) der Betankungsanlage (1) entsprechend den durch den eingestellten Regler (5) der Betankungsanlage (1) erzeugten Stellgrößen (SG).

2. Verfahren nach Anspruch 1,
wobei die Betankungsanlage (1) des Systems einen oder mehrere Hochdrucktanks (8) aufweist, die das Gas in komprimierter Form speichern.

3. Verfahren nach Anspruch 1 oder 2,
wobei Sensoren (6) der Betankungsanlage (1) als Messdaten (MD) einen Druck, P, eine Temperatur, T, und einen Massestrom, M, des während des Betankungsvorganges von der Betankungsanlage (1) abgegebenen Gases an einer oder mehreren Stellen einer Gasleitung (9) generieren, die den Hochdrucktank (8) der Betankungsanlage (1) mit dem Fahrzeugtank (2) des an die Betankungsanlage (1) angeschlossenen Fahrzeuges (3) verbindet.

4. Verfahren nach Anspruch 3,
wobei der Regler (5) ein Druckventil als Aktuator (7) der Betankungsanlage (1) ansteuert, das entlang der Gasleitung (9) vorgesehen ist.

5. Verfahren nach einem der vorangehenden Ansprüche 1 bis 4, wobei zu Beginn des Betankungsvorganges das Volumen des Fahrzeugtanks (2) und Anfangsbedingungen (14), insbesondere eine Außentemperatur (T_amb) und ein Vordruck im Fahrzeugtank (2), bestimmt wird (SØ).

6. Verfahren nach Anspruch 5,
wobei das zu simulierende System anhand einer Messung identifiziert wird, bei der die Gasleitung (9) mit einem kurzzeitigen hohen Massestrom des Gases bei geöffnetem Druckventil beaufschlagt wird, wobei die Systemantwort des Systems hierauf aufgezeichnet und zur Identifikation des Systems, insbesondere zur Bestimmung des Fahrzeugtankvolumens des Fahrzeugtanks (2), durch den Rechner (4) der Betankungsanlage (1) ausgewertet wird.

7. Verfahren nach einem der vorangehenden Ansprüche 5 oder 6,
wobei das Simulationsmodell(SIM-MOD) des identifizierten Systems zur Simulation des Systems durch den Rechner (4) der Betankungsanlage (1) aus einem Datenspeicher (10) geladen wird.

8. Verfahren nach einem der Ansprüche 1 bis 7,
wobei der Betankungsvorgang protokollfrei ohne Austausch von Steuersignalen zwischen dem Fahrzeug (3) und dem Rechner (4) der Betankungsanlage (1) erfolgt.

9. Verfahren nach einem der vorangehenden Ansprüche 1 bis 8, wobei das Simulationsmodell (SIM-MOD)ein Echtzeit-Simulationsmodell ist, welches das System anhand von Differentialgleichungen beschreibt.

10. Verfahren nach einem der vorangehenden Ansprüche 1 bis 9, wobei der Fahrzeugtank (2) des Fahrzeuges (3) durch die Betankungsanlage (1) mit Wasserstoffgas oder einem anderen Gas betankt wird.

11. Verfahren nach einem der vorangehenden Ansprüche 1 bis 10,
wobei das durch die Betankungsanlage (1) in dem Betankungsvorgang an den Fahrzeugtank (2) des Fahrzeuges (3) abgegebene Gas durch einen Wärmetauscher (11) der Betankungsanlage (1) gekühlt wird.

12. Verfahren nach einem der vorangehenden Ansprüche 1 bis 11,
wobei das Gas während des Betankungsvorganges aus dem Hochdrucktank (8) der Betankungsanlage (1) in einem Massestrom durch eine Gasleitung (9) der Betankungsanlage (1) über mindestens einen durch den Regler (5) betätigten Aktuator (7) der Betankungsanlage (1) und einen Wärmetauscher (11) der Betankungsanlage (1) zu dem Fahrzeugtank (2) des Fahrzeuges (3) strömt, der über einen Schlauch (12) an die Betankungsanlage (1) angeschlossen ist, wobei Sensoren (6) der Betankungsanlage (1) jeweils Messdaten (MD) hinsichtlich des Drucks, P, der Temperatur, T, und des Massestromes, M, an verschiedenen Stellen der Gasleitung (9) generieren und an den Rechner (4) der Betankungsanlage (1) in Echtzeit zur Simulation des Systems übermitteln.

13. Verfahren nach einem der vorangehenden Ansprüche 1 bis 12,
wobei das Einstellen des Reglers (5) der Betankungsanlage (S2) zyklisch regelmäßig innerhalb eines ersten einstellbaren Zeitintervalls von ein bis zehn Sekunden erfolgt.

14. Verfahren nach einem der vorangehenden Ansprüche 1 bis 13,
wobei das Betätigen des Aktuators (7) der Betankungsanlage (S3) entsprechend der durch den Regler (5) der Betankungsanlage (1) erzeugten Stellgrößen (SG) zyklisch regelmäßig innerhalb eines zweiten einstellbaren Zeitintervalls von ein bis zehn Millisekunden erfolgt.

15. Betankungsanlage (1) zum Betanken eines Fahrzeugtanks (2) eines Fahrzeugs (3) mit Gas, insbesondere Wasserstoff, in einem Betankungsvorgang, mit:
einem Rechner (4), der ein System, das die gasspeichernden und gasführenden Komponenten der Betankungsanlage (1) und den zu betankenden Fahrzeugtank (2) des Fahrzeugs (3) umfasst, auf Basis eines gespeicherten Simulationsmodells (SIM-MOD) des Systems anhand von Messdaten (MD), die in Echtzeit durch Sensoren (6) der Betankungsanlage (1) während des Betankungsvorganges generiert werden, zur Berechnung von Regelparametern, RP, simuliert; und mit mindestens einem Regler (5), welcher mit Regelparametern (RP) einstellbar ist, die durch den Rechner (4) durch Simulation des Systems berechnet werden, um Stellgrößen (SG) zur Betätigung mindestens eines zugehörigen Aktuators (7) der Betankungsanlage (1) während des Betankungsvorganges zu erzeugen.
